# EUROPEAN PATENT SPECIFICATION

(11) **EP 3 357 882 B1**
(45) Date of publication and mention of the grant of the patent: **24.03.2021**
(21) Application number: 16850597.2
(22) Date of filing: 14.09.2016
(51) Int. Cl.: C03C 27/06, C03C 8/24, E06B 3/673, E06B 3/677

(54) **GLASS PANEL UNIT MANUFACTURING METHOD AND GLASS WINDOW MANUFACTURING METHOD**
GLASSCHEIBENEINHEITHERSTELLUNGSVERFAHREN UND GLASFENSTERHERSTELLUNGSVERFAHREN
PROCÉDÉ DE FABRICATION D'UNITÉ DE PANNEAU DE VERRE ET PROCÉDÉ DE FABRICATION DE FENÊTRE EN VERRE

(30) Priority: 29.09.2015 JP 2015192246
(43) Date of publication of application: 08.08.2018
(73) Proprietor: Panasonic Intellectual Property Management Co., Ltd., Osaka-shi, Osaka 540-6207 (JP)
(72) Inventor: ISHIBASHI, Tasuku, Osaka 540-6207 (JP); URIU, Eiichi, Osaka 540-6207 (JP); NONAKA, Masataka, Osaka 540-6207 (JP); HASEGAWA, Kazuya, Osaka 540-6207 (JP); ABE, Hiroyuki, Osaka 540-6207 (JP)
(74) Representative: Müller-Boré & Partner Patentanwälte PartG mbB
(86) International application number: PCT/JP2016/004177
(87) International publication number: WO 2017/056416

(56) References cited:
- EP-A1- 2 851 350
- WO-A1-2012/001824
- WO-A1-2012/134818
- WO-A1-2015/087718
- WO-A1-2016/108272
- JP-A- 2002 348 144
- JP-A- 2006 111 463
- US-A1- 2013 115 460

## Description

The present invention relates to glass panel unit manufacturing methods and glass window manufacturing methods. The present invention specifically relates to a glass panel unit manufacturing method for manufacturing a glass panel unit including a pair of panels with a reduced-pressure space between the pair of panels and a glass window manufacturing method for manufacturing a glass window including the glass panel unit.

A known glass panel unit (hereinafter referred to as a "glass panel unit") includes a pair of panels (glass plates) between which a reduced-pressure space is provided. The glass panel unit may also be referred to as double glazing. The glass panel unit has an excellent thermal insulation property because the reduced-pressure space suppresses thermal conduction. During manufacturing of a glass panel unit, two panels which are paired are bonded to each other with a space therebetween, and gas in the space formed between the pair of panels is exhausted to hermetically enclose the space, thereby forming a reduced-pressure space.

In a known glass panel unit manufacturing method, a sealing member surrounding the periphery of the reduced-pressure space is formed from a glass adhesive. For example, Patent Literature 1 describes glass powder as the sealing member of the double glazing. When the sealing member is formed from the glass adhesive, the glass adhesive is integrated with the panels, and thus, a glass panel unit with integrity can be obtained.

The glass adhesive used in the manufacturing of the glass panel unit may be a material including glass powder and a binder. Including the binder enables easy application of the glass adhesive to the panels. Heating the glass adhesive enables particles of the glass powder to be melted and integrated with each other while the binder is removed. However, in a manufacturing process of the glass panel unit, it is not easy to sufficiently remove the binder. In the glass panel unit, if removal of the binder is insufficient and the binder remains, the adhesive strength of the pair of panels may be reduced and/or the reduced-pressure space may be adversely affected. Moreover, when the binder remains, coloring or discoloring of the sealing member may be caused.
Patent Literature 2 describes a bonding material. Patent Literature 3 discloses a heat-insulating member, low-melting-point glass composition, and sealing material paste. Patent Literature 4 describes light-weight strengthened, low-emittance vacuum insulated glass (vig) windows.
Patent Literature 1: JP H11-278877 A
Patent Literature 2: US 2013/115460 A1
Patent Literature 3: WO 2015/087718 A1
Patent Literature 4: WO 2012/134818 A1

An object of the present invention is to provide a glass panel unit manufacturing method and a glass window manufacturing method which enable effective removal of a binder from a glass adhesive, provide high adhesive strength of panels, and enable stable formation of a reduced-pressure space.

A glass panel unit manufacturing method of an aspect of the present invention includes an adhesive disposing step, an opposite disposition step, an inner space forming step, a pressure reducing step, and a reduced-pressure space forming step. The adhesive disposing step is a step of disposing a glass adhesive on one surface of both side surfaces in a thickness direction of a first substrate to form at least a frame-like portion. The glass adhesive includes glass powder and a binder. The glass powder has an average particle diameter larger than or equal to 25 µm and smaller than or equal to 30 µm. The binder is made of resin. The first substrate includes at least a first glass plate. The opposite disposition step is a step of disposing a second substrate including at least a second glass plate to face the one surface. In the opposite disposition step, a glass composite including the first substrate, the second substrate, and the glass adhesive is formed. The inner space forming step is a step of heating the glass composite to remove the binder and to melt the glass adhesive to form an inner space surrounded by a melted substance of the glass adhesive between the first substrate and the second substrate. The pressure reducing step is a step of exhausting gas in the inner space to reduce a pressure in the inner space. The reduced-pressure space forming step is a step of forming a reduced-pressure space hermetically sealed from the inner space by sealing the inner space with a pressure-reduced state of the inner space being maintained,
wherein
the glass adhesive includes
   a first glass adhesive and
   a second glass adhesive,
at least the second glass adhesive of the first glass adhesive and the second glass adhesive includes the glass powder and the binder,
wherein the glass powder included in the second glass adhesive has an average particle diameter larger than or equal to 25 µm and smaller than or equal to 30 µm,
the adhesive disposing step includes
   a first adhesive disposing step of disposing the first glass adhesive on a peripheral portion of the one surface of the first substrate to have a single-frame shape, and
   a second adhesive disposing step of disposing the second glass adhesive within an area surrounded by the first glass adhesive on the one surface to partition an area surrounded by the first glass adhesive, and
the inner space forming step includes melting the first glass adhesive to form the inner space surrounded by a melted substance of the first glass adhesive between the first substrate and the second substrate,
wherein
in the second adhesive disposing step, the second glass adhesive is disposed apart from the first glass adhesive, and
the reduced-pressure space forming step includes melting the second glass adhesive to bring the melted substance of the first glass adhesive and a melted substance of the second glass adhesive into contact with each other to form the reduced-pressure space, and
in the reduced-pressure space forming step, an integrated panel is obtained by compositing and integrating the first substrate, the second substrate, and the glass adhesive with each other, and
in the integrated panel, the first glass adhesive and the second glass adhesive are integrated, thereby forming the sealing member including the first glass adhesive and the second glass adhesive, and
the sealing member surrounds the reduced-pressure space.

A glass window manufacturing method according to an aspect of the present invention includes manufacturing a glass window by fitting a window frame to a glass panel unit manufactured by the glass panel unit manufacturing method.
FIGS. 1A to IE illustrate a glass panel unit manufacturing method of a first embodiment according to the present invention, and more specifically, FIGS. 1A to IE are sectional views each illustrating a step in the glass panel unit manufacturing method;
FIGS. 2A to 2C illustrate the glass panel unit manufacturing method, and more specifically, FIGS. 2A to 2C are plan views each illustrating a step in the glass panel unit manufacturing method;
FIGS. 3A to 3C are schematic views each illustrating a glass adhesive, wherein FIG. 3A illustrates the glass adhesive before a binder is removed, FIG. 3B illustrates the glass adhesive of FIG. 3A after the binder is removed, and FIG. 3C illustrates the glass adhesive of FIG. 3B after particles of glass powder are melted and integrated with each other;
FIGS. 4A and 4B illustrate a glass panel unit manufacturing method of a second embodiment according to the present invention, and more specifically, FIGS. 4A and 4B are plan views each illustrating a step in the glass panel unit manufacturing method of the second embodiment;
FIG. 5A is a plan view illustrating a glass panel unit manufactured by a glass panel unit manufacturing method of a third embodiment according to the present invention, and FIG. 5B is a sectional view taken along line A-A of FIG. 5A; and
FIG. 6 is a front view illustrating a glass window manufactured by a glass window manufacturing method of a fourth embodiment according to the present invention.

First to fourth embodiments will be described below.

### First Embodiment

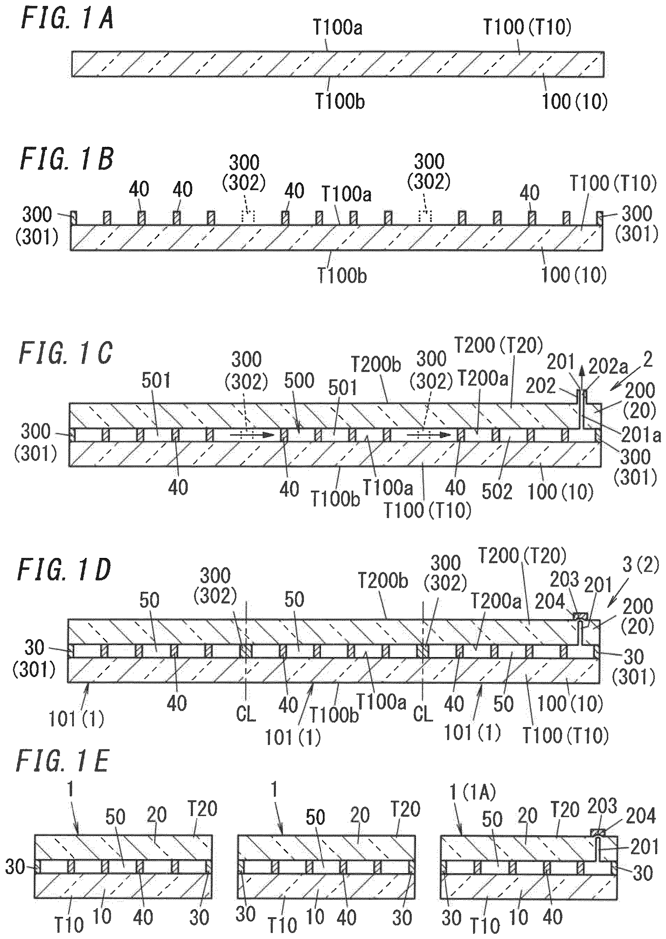

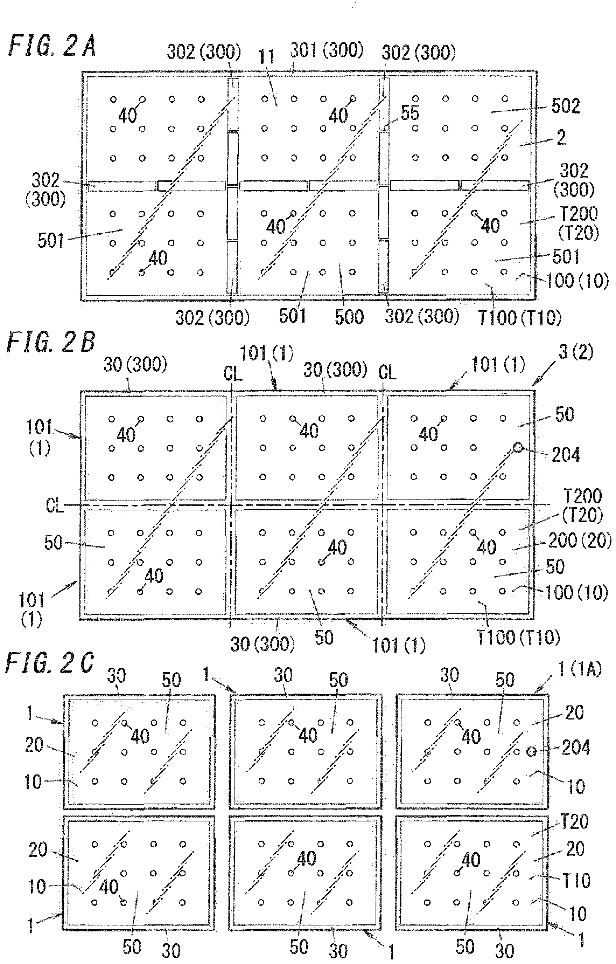

First, a first embodiment will be described. FIGS. 1A to 1E and FIGS. 2A to 2C illustrate an example method (manufacturing method) for manufacturing a glass panel unit 1 of the present embodiment. FIGS. 1A to IE are sectional views each illustrating a step in the method for manufacturing the glass panel unit 1. FIGS. 2A to 2C are plan views each illustrating a step in the method for manufacturing the glass panel unit 1.

FIGS. 1A to IE and FIGS. 2A to 2C each schematically show a step in the method for manufacturing the glass panel unit 1. The actual dimension of each of members or the glass panel unit 1 may be different from that shown in FIGS. 1A to 1E and FIGS. 2A to 2C. In particular, in FIGS. 1A to IE, the thickness of the glass panel unit 1 and the thickness of each member of the glass panel unit 1 in steps in the manufacturing method are illustrated larger than their actual dimensions so as to facilitate understanding. Moreover, in FIGS. 2A to 2C, members (a sealing member 30 and spacers 40) in the glass panel unit 1 are not shown in broken lines but are shown in thin lines so as to facilitate understanding.

### Glass Panel Unit

FIGS. 1E and 2C each show the glass panel unit 1 manufactured (formed) by the manufacturing method of the present embodiment. As illustrated in FIG. 2C, six glass panel units 1 are obtained by the manufacturing method of the present embodiment.

The glass panel unit 1 is substantially transparent. Thus, inner members (e.g., the sealing member 30 and the spacers 40) in the glass panel unit 1 are visible. In FIGS. 2B and 2C, the inner members which are visible are illustrated. FIG. 2C is a view illustrating the glass panel unit 1 seen from a side on which the second panel T20 is provided.

The glass panel unit 1 includes a pair of panels T10 and T20 facing each other and the sealing member 30 bonded to the pair of panels T10 and T20 and having a frame shape. In the following description, one of the pair of panels T10 and T20 is referred to as a first panel T10, and the other panel T20 of the pair of panels T10 and T20 which faces the first panel T10 is referred to as a second panel T20 (see FIGS. IE and 2C).

The first panel T10 is made of at least first glass 10. The first panel T10 of the present embodiment includes only the first glass 10.

The second panel T20 is made of at least second glass 20. The second panel T20 of the present embodiment includes only the second glass 20.

The glass panel unit 1 includes the spacers 40. The spacers 40 are disposed between the first panel T10 and the second panel T20. The glass panel unit 1 has a reduced-pressure space 50. The reduced-pressure space 50 is formed between the first panel T10 and the second panel T20. The glass panel unit 1 of the present embodiment has a vacuum space as the reduced-pressure space 50. That is, the glass panel unit 1 of the present embodiment is a vacuum glass panel unit (vacuum glass panel). Note that the reduced-pressure space 50 does not have to be a vacuum space but is only required to be a space having a pressure lower than the atmospheric pressure.

A material which forms the glass panel unit 1 at least includes a pair of substrates T100 and T200, a glass adhesive 300, and the spacers 40. In the following description, one of the pair of substrates T100 and T200 is referred to as a first substrate T100 and the other of the pair of substrates T100 and T200 is referred to as a second substrate T200.

The first panel T10 of the glass panel unit 1 is manufactured from the first substrate T100. The second panel T20 of the glass panel unit 1 includes the second substrate T200. The sealing member 30 of the glass panel unit 1 includes the glass adhesive 300. That is, the sealing member 30 is a hardened material of the glass adhesive 300.

### Manufacturing Glass Panel Unit

In the present embodiment, a substrate prepared as the first substrate T100 at the start of the manufacturing has a size larger than the size of the first panel T10 of the glass panel unit 1 which is to be manufactured (manufactured glass panel unit 1). Moreover, in the manufacturing method of the present embodiment, a substrate prepared as the second substrate T200 at the start of the manufacturing has a size larger than the size of the second panel T20 of the glass panel unit 1 which is to be manufactured (manufactured glass panel unit 1).

More specifically, in the manufacturing method of the present embodiment, a substrate prepared as the first substrate T100 has a size corresponding to a plurality of (specifically, six) first panels T10. Moreover, a substrate prepared as the second substrate T200 has a size corresponding to a plurality of (specifically, six) second panels T20.

As the present embodiment, a method for simultaneously manufacturing a plurality of glass panel units 1 from large-size substrates T100 and T200 is referred to as multiple production. The multiple production enables glass panel units 1 to be efficiently manufactured.

In a step in the method for manufacturing the glass panel unit 1 of the present embodiment, a glass composite 2 including the first substrate T100, the second substrate T200, the glass adhesive 300, and the spacers 40 is formed.

FIGS. 1C and 2A show the glass composite 2. Moreover, in the course of manufacturing the glass panel unit 1, an integrated panel 3 is formed by integrating the first substrate T100, the second substrate T200, and the glass adhesive 300 with each other. FIGS. 1D and 2B show the integrated panel 3.

The manufacturing method of the glass panel unit 1 of the present embodiment includes a substrate preparation step, an adhesive disposing step, an opposite disposition step, an inner space forming step, a pressure reducing step, a reduced-pressure space forming step, a cooling step, and a cutting step. The substrate preparation step, the adhesive disposing step, the opposite disposition step, the inner space forming step, the pressure reducing step, the reduced-pressure space forming step, the cooling step, and the cutting step are started in this order.

### Substrate Preparation Step

To manufacture the glass panel unit 1, the substrate preparation step (a glass plate preparing step) is first performed. The substrate preparation step is a step of preparing the first substrate T100 and the second substrate T200.

The first substrate T100 and the second substrate T200 are transparent. In this embodiment, the term "transparent" also includes the meaning of translucent and means that the first substrate T100 and the second substrate T200 each have a light transmitting property.

FIG. 1A shows the first substrate T100 which is prepared. The first substrate T100 includes at least a first glass plate 100. The first substrate T100 of the present embodiment includes only the first glass plate 100 (a plate made of glass).

The first substrate T100 of the present embodiment has surfaces (a first surface T100a and a second surface T100b which will be described later) which are flat. The first substrate T100 of the present embodiment includes at least one first panel T10. The substrate preparation step may include processing the first substrate T100 to have an arbitrary dimension and/or disposing the first substrate T100 on a prescribed device.

FIG. 1A shows only the first substrate T100, but in the substrate preparation step of the present embodiment, the second substrate T200 is also prepared separately. The preparation of the second substrate T200 includes preparing a second substrate T200 which is to be paired with the first substrate T100 and which has a prescribed dimension. Note that the second substrate T200 may be prepared after the adhesive disposing step.

The second substrate T200 includes at least a second glass plate 200. The second substrate T200 of the present embodiment includes only the second glass plate 200 (plate made of glass).

The second substrate T200 of the present embodiment has surfaces (a first surface T200a and a second surface T200b which will be described later) which are flat. The second substrate T200 of the present embodiment includes at least one second panel T20.

FIG. 1C shows the second substrate T200 (where the second substrate T200 is laid over the first substrate T100). The second substrate T200 has an exhaust port 201.

The second substrate T200 of the present embodiment has a hole 201a penetrating the second substrate T200. Moreover, the surface (the second surface T200b which will be described later) of the second substrate T200 is provided with an exhaust pipe 202 integrally attached to the second substrate T200. A hole 202a formed in the exhaust pipe 202 is in communication with the hole 201a. The hole 202a and the hole 201a form the exhaust port 201.

The preparation of the second substrate T200 may include forming the exhaust port 201 (the hole 201a and the hole 202a) in the second substrate T200. Moreover, the exhaust port 201 may be formed in the first substrate T100 but not in the second substrate T200.

The first substrate T100 has both side surfaces in a thickness direction of the first substrate T100, and one of the side surfaces is defined as the first surface T100a, and the other of the side surfaces is defined as the second surface T100b. The first surface T100a of the first substrate T100 faces the second substrate T200 and serves as an inner surface of the glass panel unit 1. The second surface T100b of the first substrate T100 is a surface opposite to the first surface T100a and serves as an outer surface of the glass panel unit 1.

The second substrate T200 has both side surfaces in a thickness direction of the second substrate T200, and one of the side surfaces is defined as the first surface T200a, and the other of the side surfaces is defined as the second surface T200b. The first surface T200a of the second substrate T200 faces the first substrate T100 and serves as an inner surface of the glass panel unit 1. The second surface T200b of the second substrate T200 is a surface opposite to the first surface T200a and serves as an outer surface of the glass panel unit 1. The first surface T100a of the first substrate T100 faces the first surface T200a of the second substrate T200.

The first glass plate 100 has a surface which faces the second substrate T200 and which may be provided with a heat reflective film. In this case, the first substrate T100 includes the first glass plate 100 and the heat reflective film.

The second glass plate 200 has a surface which faces the first substrate T100 and which may be provided with a heat reflective film. In this case, the second substrate T200 includes the second glass plate 200 and the heat reflective film.

In the glass panel unit 1, the heat reflective film may be provided on the first surface T100a of the first substrate T100 and the first surface T200a of the second substrate T200. That is, the heat reflective film may be provided on at least one of an inner surface (a surface facing the second substrate T200) of the first glass plate 100 and an inner surface (a surface facing the first substrate T100) of the second glass plate 200. The heat reflective film has a heat reflective property, which improves the thermal insulation property of the glass panel unit 1.

The heat reflective film may be, for example, an infrared reflective film. The infrared reflective film can block infrared rays. The heat reflective film may be a Low-E film. The heat reflective film may have a thermal barrier property. The heat reflective film is made of, for example, a metal thin film having an infrared ray blocking property. Note that the metal thin film has a small thickness and is light transmissive. Thus, the metal thin film has substantially no influence over the transparency of the glass panel unit 1.

The thickness of the first substrate T100 (i.e., the thickness of the first panel T10) and the thickness of the second substrate T200 (i.e., the thickness of the second panel T20) are each, for example, larger than or equal to 1 mm and smaller than or equal to 10 mm. In the present embodiment, the thickness of the first substrate T100 is equal to the thickness of the second substrate T200. When the thickness of the first substrate T100 and the thickness of the second substrate T200 are equal to each other, the same substrates can be used, which simplifies the manufacturing. As illustrated in FIG. 2A, the first substrate T100 has a rectangular shape, and similarly, the second substrate T200 also has a rectangular shape.

Examples of materials of the first substrate T100 (i.e., the first panel T10) and the second substrate T200 (i.e., the second panel T20) include soda-lime glass, high strain-point glass, chemically strengthened glass, no-alkali glass, quartz glass, Neoceram, and physically strengthened glass.

### Adhesive Disposing Step

After the first substrate T100 is prepared (after the substrate preparation step), the adhesive disposing step is performed. As illustrated in FIG. 1B, the adhesive disposing step is a step of disposing the glass adhesive 300 on the first surface T100a of the first substrate T100 to form at least a frame-like portion (a portion including a first glass adhesive 301 which will be described later). To dispose the glass adhesive 300 on the first substrate T100, the first substrate T100 is placed with the first surface T100a facing upward.

The spacers 40 may be arranged while the glass adhesive 300 is disposed. The glass adhesive 300 and the spacers 40 are arranged on the first surface T100a of the first substrate T100. The glass adhesive 300 includes hot-melt glass. The glass adhesive 300 includes at least a portion having a frame-like shape when seen in the thickness direction of the first substrate T100. The glass adhesive 300 is melted and then cured to finally form the sealing member 30. That is, the sealing member 30 is made from the glass adhesive 300 and is a hardened material of the glass adhesive 300.

The melting temperature of the glass adhesive 300 is, for example, higher than 300°C. The glass adhesive 300 may have a melting temperature higher than 400°C. Note that a low melting temperature of the glass adhesive 300 is advantageous to a process. Thus, the melting temperature of the glass adhesive 300 is preferably lower than or equal to 400°C, and more preferably lower than or equal to 360°C.

As can be seen from FIG. 2A, the glass adhesive 300 and the spacers 40 are disposed on the first substrate T100. The glass adhesive 300 may be disposed by application. For the application, for example, a dispenser may be used.

The glass adhesive 300 of the present embodiment includes at least two types of glass adhesives, namely the first glass adhesive 301 and a second glass adhesive 302. The glass adhesive 300 of the present embodiment includes the first glass adhesive 301 and the second glass adhesive 302.

The first glass adhesive 301 and the second glass adhesive 302 are provided on respective prescribed locations on the first surface T100a of the first substrate T100. In FIG. 1B, the second glass adhesive 302 is indicated by a broken line. This means that the second glass adhesive 302 is disposed to not all portions along the short sides of the first substrate T100.

From FIG. 2A, it can be seen that the arrangement of the first glass adhesive 301 and the second glass adhesive 302. Arranging the first glass adhesive 301 is defined as a first adhesive disposing step. Arranging the second glass adhesive 302 is defined as a second adhesive disposing step. The adhesive disposing step includes the first adhesive disposing step and the second adhesive disposing step. The first adhesive disposing step may first be performed or the second adhesive disposing step may first be performed. For example, the second adhesive disposing step may be performed after the first adhesive disposing step.

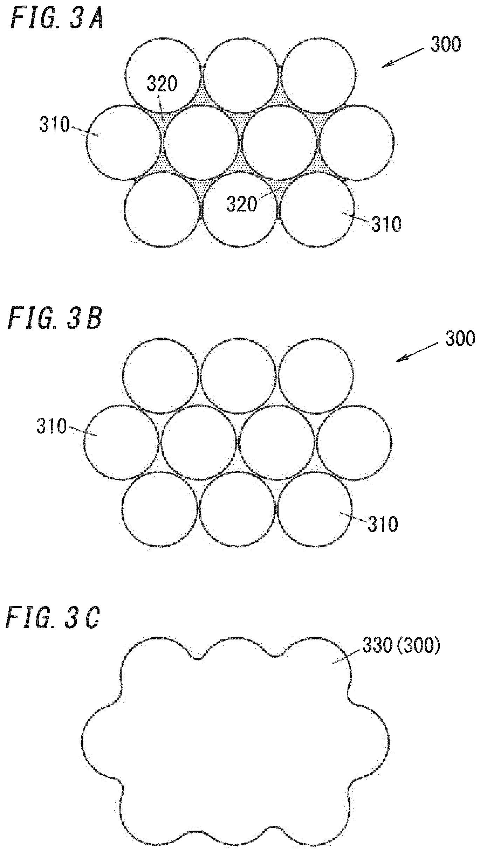

As illustrated in FIG. 3A, the glass adhesive 300 includes glass powder 310 and a binder 320. In the present embodiment, the first glass adhesive 301 includes glass powder 310 and a binder 320, and the second glass adhesive 302 also includes glass powder 310 and a binder 320. The binder 320 facilitates dispersion of the glass powder 310. Moreover, the binder 320 enables the glass adhesive 300 to be easily applied to the substrate (the first substrate T100 or the second substrate T200). The binder 320 included in the first glass adhesive 301 may be the same as or different from the binder 320 included in the second glass adhesive 302. The glass powder 310 included in the first glass adhesive 301 may be the same as or different from the glass powder 310 included in the second glass adhesive 302.

The glass powder 310 includes hot-melt glass. The hot-melt glass is also referred to as low melting glass. The glass powder 310 may be glass frit (specifically, low melting glass frit). Examples of the low melting glass frit include bismuth-based glass frit (glass frit containing bismuth), lead-based glass frit (glass frit containing lead), and vanadium-based glass frit (glass frit containing vanadium). When the low melting glass frit is used as the glass powder 310, the glass powder 310 is meltable at a low heating temperature, which facilitates the manufacturing of the glass panel unit 1.

The binder 320 is made of a resin. The material of the binder 320 is not particularly limited but may be ethyl cellulose, an acrylic resin, a butyral resin, or the like. These materials can enhance the coating property of the glass adhesive 300. The resin included in the binder 320 is preferably a resin having a low molecular weight and being easily decomposable. Since the acrylic resin has an excellent debinder property (decomposability), the acrylic resin is preferably used as the resin included in the binder 320.

The glass adhesive 300 may contain a solvent. The solvent may be an organic solvent. The solvent is removed by heating during the manufacturing of the glass panel unit 1. The binder 320 may be dissolved or dispersed in the solvent.

As can be seen from FIG. 2A, the first glass adhesive 301 is disposed at a peripheral portion of the first surface T100a of the first substrate T100. That is, the first glass adhesive 301 is disposed along an outer edge of the first substrate T100.

The first glass adhesive 301 on the first substrate T100 has a single-frame shape. That is, the first glass adhesive 301 extends in a peripheral direction on the first surface T100a and has a frame shape.

The arrangement location of the second glass adhesive 302 is within an area surrounded by the first glass adhesive 301. On the first surface T100a of the first substrate T100, the second glass adhesive 302 is arranged to partition the area surrounded by the first glass adhesive 301.

The first glass adhesive 301 and the second glass adhesive 302 are provided to correspond to edges of the glass panel unit 1 which is to be obtained. That is, the first glass adhesive 301 and the second glass adhesive 302 are arranged on portions corresponding to the edges of the glass panel units 1 on the first surface T100a of the first substrate T100.

As can be seen from the arrangement of the glass adhesive 300 in FIG. 2A, the second glass adhesive 302 is apart from the first glass adhesive 301. That is, the second glass adhesive 302 are disposed apart from the first glass adhesive 301 on the first surface T100a of the first substrate T100. In this case, the glass composite 2 has a gap (air passage 55) formed between the first glass adhesive 301 and the second glass adhesive 302. Air is easily removed through the gap.

In FIG. 2A, pieces of the second glass adhesive 302 are arranged to partition the first substrate T100 into six sections. FIG. 2A shows an example of the arrangement of the pieces of the second glass adhesive 302. The number and the arrangement pattern of the pieces of the second glass adhesive 302 are not particularly limited. The pieces of the second glass adhesive 302 are arranged to form walls.

As can be seen from FIGS. 1C and 2A, laying the second substrate T200 over the first substrate T100 forms an inner space 500 between the first substrate T100 and the second substrate T200. The second glass adhesive 302 partitions the inner space 500 into six sections.

Note that the second glass adhesive 302 does not completely separate the inner space 500. The second glass adhesive 302 partitions the inner space 500 such that two types of spaces in the inner space 500 are in communication with each other. The two types of spaces in the inner space 500 include a first space 501 which is not in direct communication with the exhaust port 201 (a space without the exhaust port 201) and a second space 502 which is in direct communication with the exhaust port 201 (a space having the exhaust port 201).

The first space 501 and the second space 502 are separated by the second glass adhesive 302. The second space 502 is in direct communication with the exhaust port 201 formed in the second substrate T200 (see FIG. 1C). The first space 501 is in communication with the exhaust port 201 via the second space 502 but is not in direct communication with the exhaust port 201.

In the present embodiment, the second glass adhesive 302 (in FIG. 2A, all pieces of the second glass adhesive 302) is apart from the first glass adhesive 301 (in FIG. 2A, a single first glass adhesive 301), and two pieces of the second glass adhesive 302 (in FIG. 2A, adjacent pieces of the second glass adhesive 302) are apart from each other. Thus, the plurality of spaces (in FIG. 2A, six spaces) including the first space 501 (in FIG. 2A, five first spaces 501) and the second space 502 (in FIG. 2A, one second space 502) are connected to each other.

A gap between the first glass adhesive 301 and each of the pieces of the second glass adhesive 302 and a gap between each two adjacent pieces of the second glass adhesive 302 serve as air passages 55 for evacuating the inner space 500 of the glass composite 2 in the pressure reducing step which will described later. In the pressure reducing step (evacuation step), air in each first space 501 passes through the air passages 55 and is exhausted from the second space 502 through the exhaust port 201.

Note that it is possible to omit one of the gap between the first glass adhesive 301 and each of the pieces of the second glass adhesive 302 and the gap between each two adjacent pieces of the second glass adhesive 302. That is, only the gap between the first glass adhesive 301 and each piece of the second glass adhesive 302 may be formed or only the gap between each two adjacent pieces of the second glass adhesive 302 may be formed.

The spacers 40 may be arranged after the glass adhesive 300 is disposed. In this case, the spacers 40 are easily arranged. The spacers 40 may be arranged at equal intervals. Alternatively, the spacers 40 may be arranged at irregular intervals. The spacers 40 may be arranged by a chip mounter or the like. Note that spacers 40 may be formed by a thin film formation technique.

The spacers 40 can sustain force causing the first substrate T100 and the second substrate T200 to approach each other. The glass panel unit 1 of the present embodiment includes the plurality of spacers 40. The plurality of spacers 40 secure the distance between the first panel T10 and the second panel T20, thereby easily forming the space (reduced-pressure space) 50 between the first panel T10 and the second panel T20.

The plurality of spacers 40 are arranged at intersections of virtual lines forming a rectangular grid. Each spacer 40 of the present embodiment has a columnar shape. The spacers 40 are arranged at a pitch of, for example, larger than or equal to 10 mm and smaller than or equal to 100 mm. The shape, dimension, pitch, arrangement pattern of the spacers 40 are not particularly limited and may be accordingly selected.

Each spacer 40 may have a prism shape or spherical shape. The spacers 40 are made of a resin, metal, or the like. The spacers 40 are preferably made of highly heat resistant polyimide. The spacers 40 may be made of a resin film.

In this embodiment, gas adsorbent may be disposed on one or both of the first surface T100a of the first substrate T100 and the first surface T200a of the second substrate T200. The gas adsorbent is to be disposed in the reduced-pressure space 50 of the glass panel unit 1 which is manufactured.

The gas adsorbent may be in solid form or may be a material having fluidity. When the gas adsorbent is in solid form, the gas adsorbent is fixed to at least one of the first surface T100a and the first surface T200a by, for example, bonding. When the gas adsorbent is a material having fluidity, the gas adsorbent is, for example, applied to at least one of the first surface T100a and the first surface T200a and is then dried, thereby being fixed to at least one of the first surface T100a and the first surface T200a.

The gas adsorbent may include getter. The gas adsorbent may include only getter. The gas adsorbent adsorbs gas in the reduced-pressure space 50. Thus, the degree of vacuum in the reduced-pressure space 50 can be maintained, and the thermal insulation property can be improved. The gas adsorbed by the gas adsorbent may be gas derived from the binder 320.

### Opposite Disposition Step

After the adhesive disposing step, the opposite disposition step is performed. As illustrated in FIGS. 1C and 2A, the opposite disposition step is a step of disposing the second substrate T200 on the glass adhesive 300 to face the first surface T100a of the first substrate T100.

Disposing the second substrate T200 on the glass adhesive 300 to face the first surface T100a of the first substrate T100 as described above forms the glass composite 2 including the first substrate T100, the second substrate T200, the glass adhesive 300, and the spacers 40.

The glass composite 2 has the inner space 500 formed between the first substrate T100 and the second substrate T200. The inner space 500 formed between the first substrate T100 and the second substrate T200 is partitioned as described with reference to FIG. 2A. In FIG. 1C, the second glass adhesive 302 is indicated by a broken line. The second glass adhesive 302 does not completely partition the inner space 500.

### Inner space Forming Step

After the opposite disposition step, the inner space forming step is performed. The inner space forming step is a step of heating the glass composite 2 to simultaneously remove the binder 320 included in the glass adhesive 300 and melt only the first glass adhesive 301 (only the glass powder 310 included in the first glass adhesive 301) of the first glass adhesive 301 and the second glass adhesive 302 so as to form the inner space 500 surrounded by a melted substance of the first glass adhesive 301 between the first substrate T100 and the second substrate T200.

Here, melting the glass adhesive 300 may mean that the glass powder 310 (hot-melt glass) is softened by heat to such an extent that the glass powder 310 can be deformed or perform bonding. Meltability does not have to be exhibited to such an extent that the glass adhesive 300 flows.

The glass composite 2 is heated in, for example, a furnace. The first glass adhesive 301 and the second glass adhesive 302 of the present embodiment are different from each other. The hot-melt temperature of the first glass adhesive 301 is lower than the hot-melt temperature of the second glass adhesive 302. That is, the first glass adhesive 301 melts at a temperature lower than the temperature at which the second glass adhesive 302 melts.

In the present embodiment, the glass adhesive 300 is heated to a temperature higher than the hot-melt temperature of the first glass adhesive 301 and lower than the hot-melt temperature of the second glass adhesive 302 to melt only the first glass adhesive 301 of the first glass adhesive 301 and the second glass adhesive 302.

As described above, when the first glass adhesive 301 melts, the first glass adhesive 301 bonds the first substrate T100 to the second substrate T200, and the inner space 500 is hermetically sealed except for the area corresponding to the exhaust port 201.

The inner space 500 is a space surrounded by the first substrate T100, the second substrate T200, and the melted substance of the first glass adhesive 301. As described above, the inner space 500 is formed between the first substrate T100 and the second substrate T200 by being surrounded by a melted substance of the glass adhesive 300. The temperature at which the first glass adhesive 301 melts but the second glass adhesive 302 does not melt is defined as a first melting temperature. At the first melting temperature, the second glass adhesive 302 does not melt, and thus, the second glass adhesive 302 maintains its shape.

Heating the glass composite 2 as described above increases the temperature of the glass composite 2. Thus, the binder 320 of the glass adhesive 300 (the first glass adhesive 301 and the second glass adhesive 302) is thermally decomposed, is vaporized, and is removed. Then, the first glass adhesive 301 reaches the hot-melt temperature, thereby melting the glass powder 310 to exhibit adhesiveness.

Note that the hot-melt temperature of the first glass adhesive 301 may be equal to the hot-melt temperature of the second glass adhesive 302. In this case, the pressure in the inner space 500 is reduced in, for example, heating the glass adhesive 300.

In this embodiment, the binder 320 included in the glass adhesive 300 (the first glass adhesive 301 and the second glass adhesive 302) is used to facilitate the application of the glass adhesive 300 and is ideally preferably removed completely in manufacturing the glass panel unit 1. That is, in the glass adhesive 300, particles of the glass powder 310 can be integrated by melting while the binder 320 is removed by heating. The binder 320 is heated to be thermally decomposed and vaporized to be removed.

In the manufacturing process of the glass panel unit 1, it is, however, not easy to completely remove the binder 320. In the glass panel unit 1, if removal of the binder 320 is insufficient and the binder 320 remains, the adhesive strength of the pair of substrates T100 and T200 (first substrate T100 and second substrate T200) may be reduced and/or the reduced-pressure space 50 may be adversely affected. Moreover, when the binder 320 remains, coloring or discoloring of the sealing member 30 may be caused. When the adhesive strength of the pair of substrates T100 and T200 is reduced, the substrates T100 and T200 may be separated from each other. Thus, in the present embodiment, the particle size of the glass powder 310 is optimized as described below to increase the removal effect of the binder 320.

At least a part of the glass adhesive 300 of the present embodiment includes the glass powder 310 having an average particle diameter larger than or equal to 25 µm and smaller than or equal to 30 µm and the binder 320. More specifically, the glass adhesive 300 includes the first glass adhesive 301 and the second glass adhesive 302, and at least the second glass adhesive 302 includes the glass powder 310 having an average particle diameter larger than or equal to 25 µm and smaller than or equal to 30 µm and the binder 320. In this case, "at least a part of' mentioned above denotes the second glass adhesive 302.

Both the first glass adhesive 301 and the second glass adhesive 302 may include the glass powder 310 having an average particle diameter larger than or equal to 25 µm and smaller than or equal to 30 µm and the binder 320. In this case, glass powder 310 having the same average particle diameters may be used for both the first glass adhesive 301 and the second glass adhesive 302, which can simplify the manufacturing.

Alternatively, the second glass adhesive 302 may include the glass powder 310 having an average particle diameter larger than or equal to 25 µm and smaller than or equal to 30 µm and the binder 320, and the first glass adhesive 301 may include glass powder 310 having an average particle diameter except for a range from 25 µm and 30 µm inclusive (e.g., having an average particle diameter larger than or equal to 10 µm and smaller than or equal to 15 µm) and the binder 320. In this case, the glass powder 310 having an average particle diameter larger than or equal to 10 µm and smaller than or equal to 15 µm which is more widely available can be adopted for the part of the glass adhesive 300, which facilitates the manufacturing.

As described above, a part of the glass adhesive 300 may include the glass powder 310 having an average particle diameter larger than or equal to 25 µm and smaller than or equal to 30 µm, or the entirety of the glass adhesive 300 may include the glass powder 310 having an average particle diameter larger than or equal to 25 µm and smaller than or equal to 30 µm.

The first glass adhesive 301 is disposed on a peripheral portion (including a peripheral edge) of the first substrate T100. The second glass adhesive 302 is disposed to partition the area surrounded by the first glass adhesive 301.

As described above, the first glass adhesive 301 is located at the peripheral portion (i.e., the edge) of the first substrate T100 and is exposed to the external environment. Thus, the first glass adhesive 301 is in a state where the binder 320 easily escapes. On the other hand, the second glass adhesive 302 is not disposed on the peripheral portion of the first substrate T100 but is disposed in the area surrounded by the first glass adhesive 301. Thus, the binder 320 does not easily escape from the second glass adhesive 302. In a heating process, the second glass adhesive 302 is sandwiched between the two substrates T100 and T200 and is not exposed to the external environment. Thus, the binder 320 in the second glass adhesive 302 is not easily removed. Thus, when the average particle diameter of the glass powder 310 included in the second glass adhesive 302 is larger than or equal to 25 µm and smaller than or equal to 30 µm, the binder 320 can be effectively removed.

The particle size of the glass powder 310 is measured by a particle size analyzer. The particle size analyzer is preferably a laser diffraction analyzer. In this case, the average particle diameter of the glass powder 310 is the value of a median size (D50).

In this embodiment, after the glass adhesive 300 is disposed, heating (pre-calcination) may be performed to remove the binder 320 in the glass adhesive 300. The pre-calcination is performed before the substrates T100 and T200 which are paired are disposed to face each other. However, when the pre-calcination is performed, the number of manufacturing processes increases, and cost is increased, which may complicate the manufacturing of the glass panel unit 1. Moreover, after the substrates T100 and T200 which are paired are disposed to face each other, a heating time for removing the binder 320 may be set separately from a heating time for melting the glass adhesive 300 so as to increase the total heating time. However, increasing the heating time lengthens the manufacturing process, which may increase the cost.

In the present embodiment, the glass adhesive 300 is used, and therefore, the binder 320 is more easily removed without performing the pre-calcination or additional heating for removal of the binder 320. Thus, the pre-calcination and the additional heating can be omitted, and manufacturing efficiency can be improved.

With reference to FIGS. 3A to 3C, heating and melting of the glass adhesive 300 will be described.

FIGS. 3A to 3C show a schematic diagram of the glass adhesive 300. FIG. 3A shows the glass adhesive 300 disposed on the first substrate T100 or the second substrate T200. The glass adhesive 300 is in a state where the binder 320 is not yet removed. FIG. 3B shows the glass adhesive 300 which is in a state where the glass adhesive 300 is heated and the binder 320 is removed. FIG. 3C shows the glass adhesive 300 whose particles of the glass powder 310 are melted and are integrated.

As illustrated in FIG. 3A, the glass adhesive 300 includes the glass powder (glass particles) 310 and the binder (binder component) 320. The glass powder 310 shown in FIG. 3A are particles of glass powder included in the glass adhesive 300. The binder 32 shown in FIG. 3A is a binder component included in the glass adhesive 300. The binder 320 may be dispersed in a solvent.

When the glass adhesive 300 is applied to the first substrate T100 or the second substrate T200, the particles of the glass powder 310 are stacked on each other as illustrated in FIG. 3A, and the binder 320 is located in a gap between the particles of the glass powder 310.

When the glass adhesive 300 is heated, the binder 320 is removed as illustrated in FIG. 3B, and the glass powder 310 remains as sediment. The glass adhesive 300 is heated to bond the first substrate T100 and the second substrate T200 to each other.

In this embodiment, the binder 320 passes through the gap between adjacent particles of the glass powder 310 and escapes to the outside. Thus, it may be difficult to sufficiently remove the binder 320 during the manufacturing of the glass panel unit 1. If the binder 320 remains, the adhesive strength of the pair of substrates T100 and T200 may decrease. In particular, as described above, the second glass adhesive 302 is not exposed to the outside, and therefore, the binder 320 of the second glass adhesive 302 is not easily removed. This is because when the first glass adhesive 301 on a peripheral edge of the glass composite 2 is blown with air from the outside of the glass composite 2 in heating, the binder 320 can be removed, but the second glass adhesive 302 is located in the glass composite 2, and the air does not reach the second glass adhesive 302.

In the present embodiment, at least the second glass adhesive 302 includes the glass powder 310 having an average particle diameter larger than or equal to 25 µm and smaller than or equal to 30 µm and the binder 320. Thus, the gap formed between the particles of the glass powder 310 shown in FIG. 3A is relatively large, and the binder 320 more easily escapes. In a case of a glass powder which is widely available and which has an average particle diameter larger than or equal to 10 µm and smaller than or equal to 15 µm, the gap formed between particles of the glass powder 310 is too small, and thus, the binder (binder component) 320 does not sufficiently escape. In the present embodiment, the particle size of the glass powder 310 is large, and the gap between adjacent particles of the glass powder 310 becomes large, and thus, decomposed gas is more easily released from the second glass adhesive 302 to the outside.

When the average particle diameter of the glass powder 310 (i.e., glass particles) is smaller than 25 µm, the binder 320 may not be sufficiently removed. On the other hand, when the average particle diameter of the glass powder 310 is larger than 30 µm, the integration of glass by melting (integration of the particles of the glass powder 310, integration of the glass powder 310 and the first substrate T100, and integration of the glass powder 310 and the second substrate T200) may become insufficient.

The particles of the glass powder 310 after the removal of the binder 320 are further heated and are melted, thereby being integrated as illustrated in FIG. 3C. That is, calcination of the glass advances. The glass adhesive 300 (glass adhesive integrated substance 330) which is obtained by the integration thus strongly bonds the first substrate T100 and the second substrate T200 to each other.

As the glass adhesive 300 is heated as described above, the removal of the binder 320 and the melting of the glass powder 310 can advance.

### Pressure Reducing Step

After the inner space forming step, the pressure reducing step is performed. The pressure reducing step of the present embodiment is a step of evacuating the inner space 500 of the glass composite 2 after the glass powder 310 of the first glass adhesive 301 reaches the first melting temperature.

That is, in the pressure reducing step of the present embodiment, the evacuation is started after the glass powder 310 of the first glass adhesive 301 reaches the first melting temperature to exhaust the gas in the inner space 500 so as to reduce the pressure of the inner space 500. The inner space 500 may be evacuated after the temperature of the glass adhesive 300 reaches a temperature (evacuation start temperature) lower than the first melting temperature. Note that as long as the glass composite 2 does not deform, the evacuation of the inner space 500 may be started before the temperature of the glass powder 310 reaches the first melting temperature.

The inner space 500 is evacuated by, for example, a vacuum pump connected to the exhaust port 201 through the exhaust port 201. In this case, for example, a pipe extending from the vacuum pump is connected to the exhaust pipe 202, and thereby the vacuum pump is connected to the exhaust port 201. The vacuum pump evacuates the inner space 500, so that the pressure in the inner space 500 is reduced, and the inner space transitions to a vacuum state.

Note that the above-described method for evacuating the inner space 500 is a mere example, and other evacuation methods may be used. For example, the entirety of the glass composite 2 may be placed in a vacuum chamber, and the entirety of the glass composite 2 may be subjected to the evacuation.

In FIG. 1C, a direction in which the gas in the inner space 500 is exhausted is indicated by the upward arrow. Moreover, a direction in which air flows by moving through the plurality of spaces including the first space 501 and the second space 502 is indicated by rightward arrows.

As described above, the second glass adhesive 302 is disposed to provide the air passages 55. Therefore, the air passes through the air passages 55 and is exhausted through the exhaust port 201. Thus, the inner space 500 including the first space 501 and the second space 502 transitions to a state in which the pressure is reduced (vacuum state).

While the inner space 500 is evacuated, the binder 320 can be removed together with the air. When the inner space 500 is evacuated, the binder 320 is located in the glass adhesive 300 or is decomposed by heat and is located in the inner space 500. When the evacuation is performed by the vacuum pump, the binder 320 is effectively removed. In particular, the binder 320 is not easily removed from the second glass adhesive 302 disposed in the glass composite 2, but reducing the pressure enables the binder 320 to be sufficiently removed.

### Reduced-pressure space Forming Step

After the degree of vacuum of the inner space 500 reaches a prescribed value in the above-described pressure reducing step, the reduced-pressure space forming step is performed. The reduced-pressure space forming step is a step of forming the reduced-pressure space 50 hermetically sealed from the inner space 500 by sealing the inner space 500 with a pressure-reduced state of the inner space 500 achieved by the pressure reducing step being maintained.

In the reduced-pressure space forming step, a heating temperature of the glass composite 2 is further increased after the degree of vacuum of the inner space 500 reaches the prescribed value in the above-described pressure reducing step. The heating temperature is increased while the evacuation of the inner space 500 is maintained. Increasing the heating temperature causes the temperature of the glass powder 310 of the second glass adhesive 302 to reach a second melting temperature higher than the first melting temperature, thereby melting the second glass adhesive 302. The second melting temperature is, for example, higher than the first melting temperature by higher than or equal to 10°C and lower than or equal to 100°C.

As described above, the glass composite 2 is heated to melt the second glass adhesive 302, and thereby, the second glass adhesive 302 which is melted bonds the first substrate T100 and the second substrate T200 to each other at a location where the second glass adhesive 302 is disposed. That is, the second glass adhesive 302 which is melted bonds the first substrate T100 to the second substrate T200 at the location of the second glass adhesive 302.

Moreover, the second glass adhesive 302 softens due to its meltability. The second glass adhesive 302 which is softened deforms and closes the air passages 55. In the present embodiment, the gap (air passage 55) between the first glass adhesive 301 and each piece of the second glass adhesive 302 closely adjacent to the first glass adhesive 301 is closed. Moreover, a gap (air passage 55) between each two adjacent pieces of the second glass adhesive 302 is closed.

As described above, the melted substance of the first glass adhesive 301 comes into contact with a melted substance of the second glass adhesive 302, and each two adjacent pieces of the second glass adhesive 302 come into contact with each other, thereby forming the reduced-pressure space 50 hermetically sealed from the inner space 500. That is, the inner space 500 is enclosed with the reduced-pressure state being maintained by deformation of the second glass adhesive 302, thereby forming a plurality of reduced-pressure spaces 50.

In the manufacturing method of the glass panel unit 1 of the present embodiment, the glass composite 2 is heated in two stages as described above, so that the removal of the binder 320 and the melting of the glass powder 310 advance. That is, in the present embodiment, the glass composite 2 is heated to increase the temperature of the glass adhesive 300 to a temperature at which the first glass adhesive 301 melts, and the temperature is maintained, and then, the glass composite 2 is heated to further increase the temperature of the glass adhesive 300 to a temperature at which the second glass adhesive 302 melts. Note that the glass adhesive 300 may be heated in three or more stages.

In this embodiment, a first stage of the heating for increasing the temperature of the glass adhesive 300 to the temperature at which the first glass adhesive 301 melts is referred to as a first heating process. Moreover, a second stage of heating performed after the first heating process to increase the temperature of the glass adhesive 300 to the temperature at which the second glass adhesive 302 melts is defined as a second heating process.

In the first heating process, the first glass adhesive 301 melts, and the second glass adhesive 302 does not melt. That is, the first glass adhesive 301 melts earlier than the second glass adhesive 302. The binder 320 is removed mainly by the first heating process. That is, large part of the binder 320 can be removed by the first heating process. Note that the binder 320 may remain even after the first heating process. In this case, the binder 320 can be further removed by the second heating process.

FIGS. 1D and 2B show the glass composite 2 after the air passages 55 are closed. The glass composite 2 becomes integrated due to the adhesive action of the glass adhesive 300. The glass composite 2 which becomes integrated is the integrated panel 3. Into the integrated panel 3, the first substrate T100, the second substrate T200, and the glass adhesive 300 are integrated by composition. The integrated panel 3 includes a plurality of (in the present embodiment, six) portions 101 which will be glass panel units 1.

In the integrated panel 3, the first glass adhesive 301 and the second glass adhesive 302 are integrated, thereby forming the sealing member 30 including the first glass adhesive 301 and the second glass adhesive 302. The sealing member 30 surrounds the reduced-pressure space 50. The first glass adhesive 301 serves as a part of the sealing member 30, and the second glass adhesive 302 serves as the other part of the sealing member 30.

In the present embodiment, the integrated panel 3 has six reduced-pressure spaces 50. The six reduced-pressure spaces 50 are formed by dividing, by the second glass adhesive 302, the inner space 500 surrounded by the first glass adhesive 301 into a plurality of spaces.

The plurality of spaces formed by dividing, by the second glass adhesive 302, the inner space 500 surrounded by the first glass adhesive 301 are not in communication with each other. These spaces include a space including the first space 501 and a space including the second space 502.

The space including the first space 501, having no exhaust port 201, and completely hermetically sealed serves as the reduced-pressure space 50 of the glass panel unit 1 as it is. On the other hand, the space (space in communication with the exhaust port 201) including the second space 502 and having the exhaust port 201 becomes the reduced-pressure space 50 when the exhaust port 201 is sealed. That is, in the reduced-pressure space forming step, as described above, the second glass adhesive 302 is melted, and then the exhaust port 201 is sealed.

The exhaust port 201 is closed by, for example, a sealing part 203. Thus, a reduced-pressure state (vacuum state) of the reduced-pressure space 50 can be maintained. The sealing part 203 may be formed from the exhaust pipe 202. The sealing part 203 can be formed by, for example, heat-welding of glass included in the exhaust pipe 202.

The evacuation of the inner space 500 by the vacuum pump described above is terminated, for example, after the reduced-pressure space 50 is formed and the exhaust port 201 is closed. The reduced-pressure space 50 is hermetically sealed, and thus, even when the evacuation of the inner space 500 is terminated, the reduced pressure state (vacuum state) is maintained. Note that for safety, the evacuation of the inner space 500 is stopped after the cooling step which will be described later.

A cap 204 configured to cover the sealing part 203 is preferably disposed outside the sealing part 203. Covering the sealing part 203 with the cap 204 improves the closing property of the exhaust port 201. Moreover, the cap 204 reduces breakage around the exhaust port 201 and also reduces breakage of the sealing part 203.

### Cooling Step

After the reduced-pressure space forming step, the cooling step is performed. The cooling step is a step of cooling the integrated panel 3 after the reduced-pressure space 50 is formed.

### Cutting Step

After the cooling step, the cutting step is performed. The cutting step is a step of cutting the integrated panel 3. The integrated panel 3 includes the plurality of glass panel units 1. Each glass panel unit 1 includes the reduced-pressure space 50. In FIGS. ID and 2B, cutting locations of the integrated panel 3 are indicated by the long dashed-short dashed lines (cutting lines) CL. The integrated panel 3 is cut along, for example, an outer edge of each portion 101 which will form the glass panel unit 1. The integrated panel 3 is cut at locations where the reduced-pressure space 50 is not broken (i.e., a portion in which the sealing member 30 is located).

As illustrated in FIGS. IE and 2C, when the integrated panel 3 is cut, the glass panel units 1 are individualized. By cutting the integrated panel 3, the glass panel units 1 can be obtained (produced). When the first substrate T100 and the second substrate T200 are cut, cut surfaces are formed in the panel T10 and T20 of the glass panel unit 1.

As described above, the manufacturing of the glass panel unit 1 preferably further includes the cutting step of cutting the first substrate T100 and the second substrate T200. Cutting the pair of substrates T100 and T200 enables a plurality of glass panel units 1 to be manufactured simultaneously. Moreover, the glass panel units 1 having no exhaust port 201 can easily be obtained by manufacturing the glass panel units 1 by cutting the substrates T100 and T200 as described above. In the present embodiment, glass panel units 1 having no exhaust port 201 and a glass panel unit 1A still having the exhaust port 201 (which is however sealed) are obtained. Having no exhaust port 201 means that a hole for exhaustion for realizing a vacuum is not provided.

The glass panel unit 1 has a rectangular shape. An outer edge of the first panel T10 is aligned with an outer edge of the second panel T20 in plan view. The term "plan view" means that the glass panel unit 1 is viewed along the thickness direction of the glass panel unit 1.

The reduced-pressure space 50 is hermetically enclosed by the first panel T10, the second panel T20, and the sealing member 30. The sealing member 30 serves as a sealer. The degree of vacuum of the reduced-pressure space 50 is lower than or equal to a prescribed value. The prescribed value of the degree of vacuum is, for example, 0.01 Pa. The reduced-pressure space 50 has a thickness, for example, larger than or equal to 10 µm and smaller than or equal to 1000 µm.

The glass panel unit 1 is applicable to, for example, a building. The glass panel unit 1 can be used as, for example, a window, a partition, a signage panel, and a glass plate of a showcase (including a refrigeration showcase and a warming showcase).

In the present embodiment, as described above, at least a part of the glass adhesive 300 includes the glass powder 310 having an average particle diameter larger than or equal to 25 µm and smaller than or equal to 30 µm and the binder 320. Thus, the binder 320 is effectively removed, the adhesiveness of glass increases, and the thermal insulation property is excellent.

The removal effect of the binder 320 is confirmed by, for example, the following experiment. Two substrates (glass plates) each having a size of 2350 mm × 1360 mm are prepared. Moreover, two types of glass adhesives are prepared, one of which is a preferable example (a so-called example) including glass powder having an average particle diameter larger than or equal to 25 µm and smaller than or equal to 30 µm and a binder and the other of which is an undesirable example (a so-called comparative example) including glass powder having an average particle diameter larger than or equal to 10 µm and smaller than or equal to 15 µm and a binder. These two types of the glass adhesives are applied in a frame shape on one of the substrates to manufacture three glass panel units in the vertical direction and three glass panel units in the lateral direction, that is, a total of nine glass panel units having the same size. The other of the substrates is laid on the glass adhesives, and the glass adhesives are heated. At this time, a heating condition is 300°C for 10 minutes. Then, the glass panel units are manufactured in a method similar to the above-described methods. After the glass panel units are manufactured, the state of the glass adhesive (in particular, of a portion disposed in the glass composite) is checked. According to such an experiment, the binder was sufficiently removed in the preferable example (example). However, in the undesirable example (comparative example), the binder remained, and coloring (discoloring) of the sealing member was observed due to the remaining binder. From the experiment, it can be seen that the glass adhesive of the present embodiment has a high effect of binder removal.

The manufacturing method of the glass panel unit 1 of the present embodiment is a mere example. The manufacturing method of the glass panel unit 1 is not limited to the manufacturing method of the glass panel unit 1 of the present embodiment. For example, the manufacturing of the glass panel unit 1 may manufacture one glass panel unit 1 from the pair of substrates. Moreover, the first glass adhesive 301 and the second glass adhesive 302 may be disposed to be in contact with each other.

### Second Embodiment

Next, a second embodiment will be described. Note that in the following description of the second embodiment, components common with those described in the first embodiment are denoted by the same reference signs as those in the first embodiment, and the description thereof will be omitted.

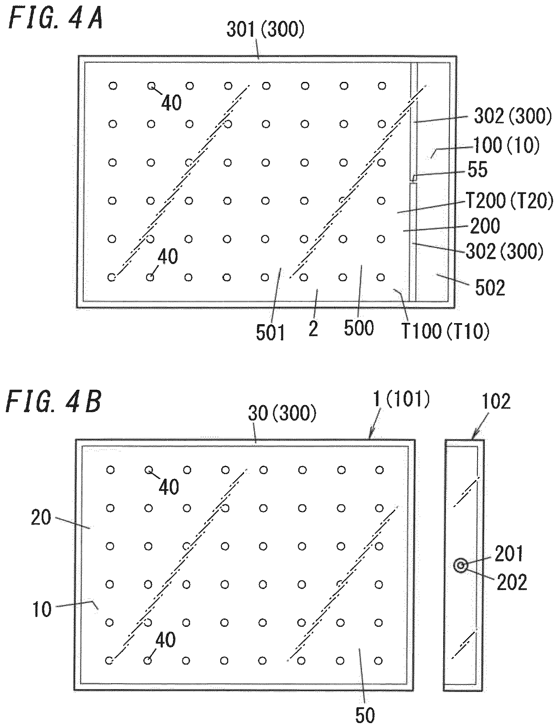

FIGS. 4A and 4B are plan views each illustrating a step of a manufacturing method of manufacturing a glass panel unit 1 of the present embodiment. FIG. 4A is a view corresponding to FIG. 2A and showing a glass adhesive 300 disposed between a first substrate T100 and a second substrate T200. FIG. 4B is a view corresponding to FIG. 2C and showing the glass panel unit 1 obtained after an integrated panel 3 is cut.

In the present embodiment, one glass panel unit 1 is manufactured from the two substrates T100 and T200 (the first substrate T100 and the second substrate T200). One glass composite 2 becomes the one integrated panel 3 and finally becomes one glass panel unit 1. The manufacturing method of the present embodiment is not multiple production. Note that in the present embodiment, a second space 502 is not closed. Thus, the integrated panel 3 includes a portion 101 which will form the glass panel unit 1 and a portion 102 which has the second space 502 and which is finally removed.

As illustrated in FIG. 4A, in an adhesive disposing step of the present embodiment, a second glass adhesive 302 is disposed in contact with a first glass adhesive 301. However, the second glass adhesive 302 may be disposed apart from the first glass adhesive 301. That is, the second glass adhesive 302 is only required to be disposed such that air and a binder 320 are removed through an air passage 55.

A specific manufacturing method of the present embodiment is similar to that of the first embodiment. Also in the present embodiment, the glass adhesive 300 (in particular, the second glass adhesive 302) includes glass powder 310 having an average particle diameter larger than or equal to 25 µm and smaller than or equal to 30 µm, and thus, the binder 320 is more easily removed sufficiently. Thus, it is possible to manufacture a glass panel unit 1 which has a high adhesive strength of a pair of panels T10 and T20 and which is less likely to be broken.

### Third Embodiment

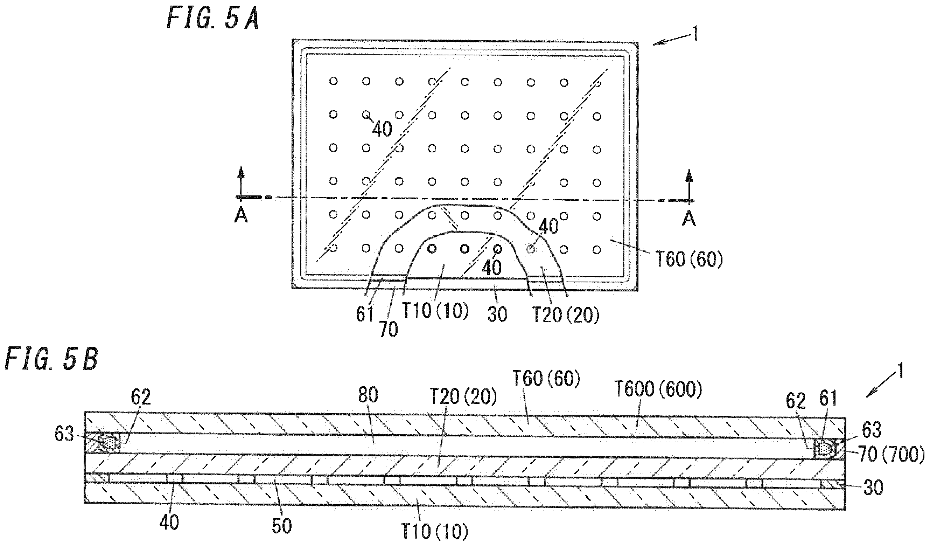

Next, with reference to FIG. 5, a third embodiment will be described. Note that a glass panel unit 1 of the third embodiment has components in addition to the components of the first embodiment or the second embodiment. Thus, in the following description, components common with those in the first embodiment and the second embodiment are denoted by the same reference signs as those in the first embodiment and the second embodiment, and the description thereof is omitted.

The glass panel unit 1 of the present embodiment includes a third panel T60 disposed to face a second panel T20. Note that in the third embodiment, the third panel T60 faces the second panel T20 (specifically, a surface of the second panel T20 opposing to a first panel T10) but may face the first panel T10 (specifically, a surface of the first panel T10 opposing to the second panel T20).

The third panel T60 is made of at least third glass 60. The third panel T60 of the present embodiment includes only the third glass 60.

Note that the third panel T60 may have a heat reflective film on either of surfaces of the third panel T60. That is, the heat reflective film may be disposed on one of side surfaces of the third glass 60 in a thickness direction of the third glass 60. In this case, the third panel T60 includes the third glass 60 and the heat reflective film.

Specifically, the heat reflective film may be disposed on either a surface of the third glass 60 facing the second panel T20 in the thickness direction or a surface of the third glass 60 away from the second panel T20 in the thickness direction. Alternatively, the heat reflective film may be disposed on both the surfaces of the third glass 60 in the thickness direction.

The glass panel unit 1 further includes a sealing member 70 disposed between the second panel T20 and the third panel T60 to hermetically bond the second panel T20 to the third panel T60. That is, the glass panel unit 1 of the present embodiment includes a first sealing member 30 including a sealing member 30 and a second sealing member 70 including the sealing member 70.

The second sealing member 70 is formed and disposed in a frame shape between a peripheral portion of the second panel T20 and a peripheral portion of the third panel T60. The second sealing member 70 is formed from a glass adhesive. That is, the second sealing member 70 is a hardened material of the glass adhesive. The second sealing member 70 may be formed from the same glass adhesive as the first sealing member 30 or a glass adhesive different from the first sealing member 30.

The glass panel unit 1 includes a hermetic space 80 hermetically enclosed by the second panel T20, the third panel T60, and the second sealing member 70 and enclosing drying gas. As the drying gas, a dried noble gas such as argon, dry air, or the like is used, but the drying gas is not particularly limited.

In the second sealing member 70 between the peripheral portion of the second panel T20 and the peripheral portion of the third panel T60, a frame member 61 which is hollow is formed and disposed to have a frame shape. The frame member 61 of the present embodiment has a frame shape along the second sealing member 70.

The frame member 61 has a through hole 62 which is in communication with the hermetic space 80. In the frame member 61, desiccant 63 such as silica gel is accommodated.

The second panel T20 and the third panel T60 can be bonded substantially in the same manner as bonding of the first panel T10 and the second panel T20, and the bonding method will be described below.

First, a third substrate T600 which will form the third panel T60 and an assembly element (the glass panel unit 1 in the first embodiment or the second embodiment) including the first panel T10 and the second panel T20 are prepared.

The third substrate T600 includes at least a third glass plate 600. In the present embodiment, the third substrate T600 includes only the third glass plate 600.

The third substrate T600 has surfaces (both side surfaces in the thickness direction) which are flat, and the third substrate T600 has a prescribed thickness.

The third substrate T600 may be provided with a heat reflective film on one of the surfaces. That is, the heat reflective film may be provided on either of the both side surfaces in the thickness direction of the third glass plate 600. In this case, the third substrate T600 includes the third glass plate 600 and the heat reflective film.

Specifically, the heat reflective film may be disposed on either a surface of the third glass plate 600 facing the second panel T20 in the thickness direction or a surface of the third glass plate 600 away from the second panel T20 in the thickness direction. Alternatively, the heat reflective film may be disposed on both the surfaces of the third glass plate 600 in the thickness direction.

A glass adhesive (third glass adhesive 700) which will form the second sealing member 70 is formed and disposed in a frame shape on a peripheral portion of a surface (surface facing the second panel T20) of the third substrate T600 or a peripheral portion of a surface (a surface facing the third substrate T600) of the second panel T20 (a second substrate T200) (a third glass adhesive disposing step).

Next, the third substrate T600 is disposed to face the second panel T20 (the second substrate T200) (third substrate opposite disposition step).

Next, the temperature of the third glass adhesive 700 is increased to a temperature at which the third glass adhesive 700 melts, and the temperature is maintained (third glass adhesive heating process). In the present embodiment, a hermetic space forming step includes the third glass adhesive disposing step, the third substrate opposite disposition step, and the third glass adhesive heating process.

Next, the drying gas is enclosed in the hermetic space 80 (drying gas enclosing step). The drying gas is enclosed, for example, through an exhaust port formed in the third substrate T600 or the third glass adhesive 700. In the drying gas enclosing step, the hermetic space 80 may be filled with only the drying gas, or air may remain in the hermetic space 80.

Next, the exhaust port is closed to seal the hermetic space 80 (second space sealing step).

The glass panel unit 1 is thus formed. The glass panel unit 1 of the present embodiment has the hermetic space 80 and thus provides a more enhanced thermal insulation property.

### Fourth Embodiment

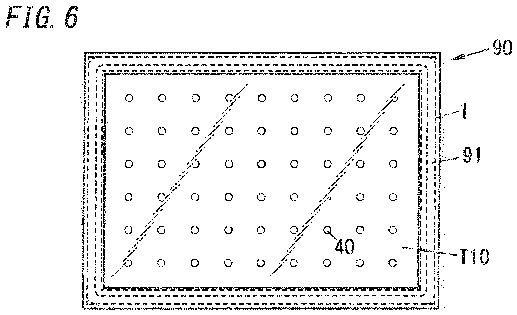

Next, with reference to FIG. 6, a fourth embodiment will be described. Note that a glass panel unit 1 of the fourth embodiment is the glass panel unit 1 of any one of the first to third embodiments and is used to form a glass window 90. Thus, in the following description, components common with those in the first to third embodiments are denoted by the same reference signs as those in the first to third embodiments, and the description thereof will be omitted.

The glass panel unit 1 of the present embodiment has a peripheral portion, and to an outer side of the peripheral portion, a window frame 91 having a U-shaped cross section is fitted, thereby forming the glass window 90. The glass window 90 of the fourth embodiment provides a more enhanced thermal insulation property.

### Additional Description

The glass panel unit 1 may be manufactured by a method other than the methods described in the first to fourth embodiments. For example, as the glass adhesive 300, only one type of adhesive may be used, and the glass adhesive 300 may be disposed only on the peripheral portion (including the peripheral edge) of the first substrate T100. In this case, the reduced-pressure space 50 is sealed by welding the exhaust pipe 202. Note that in this case, the inner space 500 of the glass composite 2 does not have to be partitioned into a plurality of spaces by the glass adhesive 300. Note that the present manufacturing method is more effectively applied to the case where the two types of the glass adhesive 300 are used as described in the first to fourth embodiments.

### Advantages

The manufacturing method of the glass panel unit (1) of each of the first to fourth embodiments described above has the following features. The manufacturing method of the glass panel unit (1) includes the adhesive disposing step, the opposite disposition step, the inner space forming step, the pressure reducing step, and the reduced-pressure space forming step. The adhesive disposing step is a step of disposing the glass adhesive (300) on one surface (the first surface (T100a)) of both side surfaces in the thickness direction of the first substrate (T100) to form at least a frame-like portion (the first adhesive (301)). The glass adhesive (300) includes the glass powder (310) and the binder (320). The glass powder (310) has an average particle diameter larger than or equal to 25 µm and smaller than or equal to 30 µm. The binder is made of resin. The first substrate (T100) includes at least the first glass plate (100). That is, the adhesive disposing step is a step of disposing the glass adhesive (300) on the first substrate (T100) to form a frame shape. At least a part of the glass adhesive (300) includes the glass powder (310) having an average particle diameter larger than or equal to 25 µm and smaller than or equal to 30 µm and the binder (320). The opposite disposition step is a step of disposing the second substrate (T200) including at least the second glass plate (200) to face the one surface (T100a). In the opposite disposition step, the glass composite (2) is obtained. The glass composite (2) includes the first substrate (T100), the second substrate (T200), and the glass adhesive (300). The inner space forming step is a step of heating the glass composite (2) to remove the binder (320) and to melt the glass adhesive (300) to form the inner space (500) surrounded by a melted substance of the glass adhesive (300) between the first substrate (T100) and the second substrate (T200). The pressure reducing step is a step of exhausting gas in the inner space (500) to reduce a pressure in the inner space (500). The reduced-pressure space forming step is a step of forming the reduced-pressure space (50) hermetically sealed from the inner space (500) by sealing the inner space (500) with a pressure-reduced state of the inner space (500) being maintained
wherein
the glass adhesive (300) includes
   a first glass adhesive (301) and
   a second glass adhesive (302),
at least the second glass adhesive (302) of the first glass adhesive (301) and the second glass adhesive (302) includes the glass powder (310) and the binder (320),
wherein the glass powder (310) included in the second glass adhesive (302) has an average particle diameter larger than or equal to 25 ìm and smaller than or equal to 30 ìm,
the adhesive disposing step includes
   a first adhesive disposing step of disposing the first glass adhesive (301) on a peripheral portion of the one surface (T100a) of the first substrate (T100) to have a single-frame shape, and
   a second adhesive disposing step of disposing the second glass adhesive (302) within an area surrounded by the first glass adhesive (301) on the one surface (T100a) to partition an area surrounded by the first glass adhesive (301), and
the inner space forming step includes melting the first glass adhesive (301) to form the inner space (500) surrounded by a melted substance of the first glass adhesive (301) between the first substrate (T100) and the second substrate (T200),
wherein
in the second adhesive disposing step, the second glass adhesive (302) is disposed apart from the first glass adhesive (301), and
the reduced-pressure space forming step includes melting the second glass adhesive (302) to bring the melted substance of the first glass adhesive (301) and a melted substance of the second glass adhesive (302) into contact with each other to form the reduced-pressure space (50), and
in the reduced-pressure space forming step, an integrated panel (3) is obtained by compositing and integrating the first substrate (T100), the second substrate (T200), and the glass adhesive (300) with each other, and
in the integrated panel (3), the first glass adhesive (301) and the second glass adhesive (302) are integrated, thereby forming the sealing member (30) including the first glass adhesive (301) and the second glass adhesive (302),and
the sealing member (30) surrounds the reduced-pressure space (50). The manufacturing method of the glass panel unit (1) is hereinafter referred to as a manufacturing method of a first aspect.

The manufacturing method of the glass panel unit (1) of the first aspect adopts the glass adhesive (300) including the glass powder (310) having an average particle diameter larger than or equal to 25 µm and smaller than or equal to 30 µm and the binder (320), which enables the binder (320) to be effectively removed. This enables the reduced-pressure space (50) to be stably formed, and thus, it is possible to manufacture the glass panel unit (1) having a high adhesive strength between the pair of substrates (T100 and T200) and being less likely to be broken.

Moreover, the manufacturing method of the glass panel unit (1) of each of the first to fourth embodiments further has the following additional feature in addition to the feature of the manufacturing method of the glass panel unit (1) of the first aspect. The glass adhesive (300) includes the first glass adhesive (301) and the second glass adhesive (302). At least the second glass adhesive (302) of the first glass adhesive (301) and the second glass adhesive (302) includes the glass powder (310) having an average particle diameter larger than or equal to 25 µm and smaller than or equal to 30 µm and the binder (320). The adhesive disposing step includes a first adhesive disposing step of disposing the first glass adhesive (301) on a peripheral portion of the one surface (T100a) of the first substrate (T100), and a second adhesive disposing step of disposing the second glass adhesive (302) on the one surface (T100a) to partition an area surrounded by the first glass adhesive (301). The first adhesive disposing step is a step of disposing the first glass adhesive (301) on the peripheral portion of the one surface (T100a). The second adhesive disposing step is a step of disposing the second glass adhesive (302) on the one (T100a) to partition the area of the first substrate surrounded by the first glass adhesive (301). The inner space forming step includes melting the first glass adhesive (301) to form the inner space (500) surrounded by a melted substance of the first glass adhesive (301) between the first substrate (T100) and the second substrate (T200). The manufacturing method of the glass panel unit (1) is hereinafter referred to as a manufacturing method of the glass panel unit (1) of the second aspect.

The second glass adhesive (302) is disposed in the area surrounded by the first glass adhesive (301) and thus does not easily escape from the first glass adhesive (301), but the manufacturing method of the glass panel unit (1) of the second aspect realizes easy removal of the binder (320) from the second glass adhesive (302) and enables the adhesive strength of the pair of substrates (T100 and T200) to be further improved. Moreover, a plurality of glass panel units (1) become easily manufactured simultaneously. Furthermore, the glass panel units (1) without the exhaust port (201) become easily manufactured.

The manufacturing method of the glass panel unit (1) of each of the first to fourth embodiments includes the following additional feature described below in addition to the features of the manufacturing method of the glass panel unit (1) of the second aspect. In the second adhesive disposing step, the second glass adhesive (302) is disposed apart from the first glass adhesive (301). The reduced-pressure space forming step includes melting the second glass adhesive (302) to bring the melted substance of the first glass adhesive (301) and a melted substance of the second glass adhesive (302) into contact with each other to form the reduced-pressure space (50). The manufacturing method of the glass panel unit (1) is hereinafter referred to as a manufacturing method of the glass panel unit (1) of a third aspect.

The manufacturing method of the glass panel unit (1) of the third aspect enables a part at which the first glass adhesive (301) and the second glass adhesive (302) are apart from each other to serve as an air passage (55) to remove the binder (320) and the adhesive strength of the pair of substrates (T100, T200) to be increased. Moreover, a plurality of glass panel units (1) become easily manufactured simultaneously. Furthermore, a glass panel unit (1) without the exhaust port (201) become easily manufactured.

Moreover, the manufacturing method of the glass panel unit (1) of each of the first to third embodiments further includes the additional features described below in addition to the features of the manufacturing method of the glass panel unit (1) of any one of the first to third aspects. The manufacturing method of the glass panel unit (1) further includes a cutting step of cutting the integrated panel (3) obtained by compositing and integrating the first substrate (T100), the second substrate (T200), and the glass adhesive (300) with each other to obtain a glass panel unit (1) having the reduced-pressure space (50). The manufacturing method of the glass panel unit (1) is hereinafter referred to as a manufacturing method of the glass panel unit (1) of a fourth aspect.

The manufacturing method of the glass panel unit (1) of the fourth aspect enables a plurality of glass panel units (1) to be manufactured simultaneously and the glass panel units (1) to be manufactured efficiently. Moreover, manufacturing of the glass panel unit (1) without the exhaust port (201) becomes easy, and the glass panel unit (1) having an excellent appearance can be obtained.

Moreover, the manufacturing method of the glass panel unit (1) of the third embodiment includes the additional feature described below in addition to the features of the manufacturing method of the glass panel unit (1) of any one of the first to fourth aspects. The method for manufacturing the glass panel unit (1) further includes a hermetic space forming step. The hermetic space forming step is a step of forming the hermetic space (80) surrounded by a glass adhesive (the third glass adhesive (700)), the third substrate (T600), and the first or second substrate (T100 or T200) with the glass adhesive being disposed between the first or second substrate (T100 or T200) and the third substrate (T600) including at least the third glass plate (600). The manufacturing method of the glass panel unit (1) is hereinafter referred to as a manufacturing method of the glass panel unit (1) of a fifth aspect.

The manufacturing method of the glass panel unit (1) of the fifth aspect enables manufacturing of the glass panel unit (1) having a hermetic space (80) and an excellent thermal insulation property.

Moreover, the manufacturing method of the glass window (90) of the fourth embodiment includes the following feature. The manufacturing method of the glass window (90) includes a step of manufacturing the glass window (90) by fitting the window frame (91) to the glass panel unit (1) manufactured by the manufacturing method of the glass panel unit (1) according to any one of the first to fifth aspects. The manufacturing method of the glass window (90) is hereinafter referred to as a manufacturing method of the glass window (90) of a sixth aspect.

The manufacturing method of the glass window (90) of the sixth aspect enables manufacturing of the glass window (90) including the glass panel unit (1) and the window frame (91) fitted to the glass panel unit (1).

### Reference Signs List

- 1: Glass Panel Unit
- 50: Reduced-Pressure Space
- T100: First Substrate
- T100a: First Surface
- 100: First Glass Plate
- T200: Second Substrate
- 200: Second Glass Plate
- 300: Glass Adhesive
- 301: First Glass Adhesive
- 302: Second Glass Adhesive
- 310: Glass Powder
- 320: Binder
- 500: Inner Space
- T600: Third Substrate
- 600: Third Glass Plate
- 700: Glass Adhesive (Third Glass Adhesive)

## Claims

1. A glass panel unit manufacturing method, comprising:
an adhesive disposing step of disposing a glass adhesive (300) on one surface (T100a) of both side surfaces (T100a, T100b) in a thickness direction of a first substrate (T100) to form at least a frame-like portion, the glass adhesive (300) including glass powder (310) and a binder (320), the glass powder (310) having an average particle diameter larger than or equal to 25 µm and smaller than or equal to 30 µm, the binder (320) being made of resin, the first substrate (T100) including at least a first glass plate (100);
an opposite disposition step of disposing a second substrate (T200) including at least a second glass plate (200) to face the one surface (T100a);
an inner space forming step of heating a glass composite (2) including the first substrate (T100), the second substrate (T200), and the glass adhesive (300) to remove the binder (320) and to melt the glass adhesive (300) to form an inner space (500) surrounded by a melted substance of the glass adhesive (300) between the first substrate (T100) and the second substrate (T200);
a pressure reducing step of exhausting gas in the inner space (500) to reduce a pressure in the inner space (500); and
a reduced-pressure space forming step of forming a reduced-pressure space (50) hermetically sealed from the inner space (500) by sealing the inner space (500) with a pressure-reduced state of the inner space (500) being maintained,
wherein
the glass adhesive (300) includes
a first glass adhesive (301) and
a second glass adhesive (302),
at least the second glass adhesive (302) of the first glass adhesive (301) and the second glass adhesive (302) includes the glass powder (310) and the binder (320),
wherein the glass powder (310) included in the second glass adhesive (302) has an average particle diameter larger than or equal to 25 µm and smaller than or equal to 30 µm,
the adhesive disposing step includes
a first adhesive disposing step of disposing the first glass adhesive (301) on a peripheral portion of the one surface (T100a) of the first substrate (T100) to have a single-frame shape, and
a second adhesive disposing step of disposing the second glass adhesive (302) within an area surrounded by the first glass adhesive (301) on the one surface (T100a) to partition an area surrounded by the first glass adhesive (301), and
the inner space forming step includes melting the first glass adhesive (301) to form the inner space (500) surrounded by a melted substance of the first glass adhesive (301) between the first substrate (T100) and the second substrate (T200),
wherein
in the second adhesive disposing step, the second glass adhesive (302) is disposed apart from the first glass adhesive (301), and
the reduced-pressure space forming step includes melting the second glass adhesive (302) to bring the melted substance of the first glass adhesive (301) and a melted substance of the second glass adhesive (302) into contact with each other to form the reduced-pressure space (50), and
in the reduced-pressure space forming step, an integrated panel (3) is obtained by compositing and integrating the first substrate (T100), the second substrate (T200), and the glass adhesive (300) with each other, and
in the integrated panel (3), the first glass adhesive (301) and the second glass adhesive (302) are integrated, thereby forming the sealing member (30) including the first glass adhesive (301) and the second glass adhesive (302), and
the sealing member (30) surrounds the reduced-pressure space (50).

2. The glass panel unit manufacturing method according to claim 1, wherein
the hot-melt temperature of the first glass adhesive (301) is lower than the hot-melt temperature of the second glass adhesive (302),
in the inner space forming step, the glass adhesive is heated to a temperature higher than the hot-melt temperature of the first glass adhesive (301) and lower than the hot-melt temperature of the second glass adhesive (302) to melt only the first glass adhesive (301) of the first glass adhesive (301) and the second glass adhesive (302).

3. The glass panel unit manufacturing method according to claim 1 or claim 2, wherein
the second glass adhesive (302) contains an organic solvent dissolving or dispersing the binder (320).

4. The glass panel unit manufacturing method according to any one of claims 1 to 3, wherein
the glass panel unit manufacturing method further comprises a cutting step of cutting the integrated panel (3) to obtain a glass panel unit (1) having the reduced-pressure space (50).

5. The glass panel unit manufacturing method according to any one of claims 1 to 4, further comprising a hermetic space forming step of forming a hermetic space (80) surrounded by a glass adhesive (700), a third substrate (T600), and the first or second substrate (T100 or T200) with the glass adhesive being disposed between the first or second substrate (T100 or T200) and the third substrate (T600) including at least a third glass plate (600).

6. A glass window manufacturing method, comprising a step of manufacturing a glass window (90) by fitting a window frame (91) to a glass panel unit (1) manufactured by the glass panel unit manufacturing method according to any one of claims 1 to 5.

## Patentansprüche

1. Verfahren zur Herstellung einer Glasplatteneinheit, umfassend:
einen Haftmittelanordnungsschritt des Anordnens eines Glashaftmittels (300) auf einer Oberfläche (T100a) beider Seitenoberflächen (T100a, T100b) in einer Dickenrichtung eines ersten Substrats (T100), um mindestens einen rahmenartigen Abschnitt zu bilden, wobei das Glashaftmittel (300) Glaspulver (310) und ein Bindemittel (320) enthält, wobei das Glaspulver (310) einen durchschnittlichen Teilchendurchmesser von größer als oder gleich 25 µm und kleiner als oder gleich 30 µm aufweist, wobei das Bindemittel (320) aus Harz hergestellt ist, wobei das erste Substrat (T100) mindestens eine erste Glasplatte (100) enthält;
einen Schritt des gegenüberliegenden Anordnens des Anordnens eines zweiten Substrats (T200), das mindestens eine zweite Glasplatte (200) enthält, so dass es der einen Oberfläche (T100a) gegenüberliegt;
einen Innenraumbildungsschritt des Erwärmens eines Glaskomposits (2), das das erste Substrat (T100), das zweite Substrat (T200) und das Glashaftmittel (300) enthält, um das Bindemittel (320) zu entfernen und das Glashaftmittel (300) zu schmelzen, um einen Innenraum (500) zu bilden, der von einer geschmolzenen Substanz des Glashaftmittels (300) zwischen dem ersten Substrat (T100) und dem zweiten Substrat (T200) umgeben ist;
einen Druckreduzierungsschritt des Absaugens von Gas in dem inneren Raum (500), um einen Druck in dem inneren Raum (500) zu reduzieren; und
einen Schritt des Bildens eines Raums mit reduziertem Druck zum Bilden eines Raums (50) mit reduziertem Druck, der hermetisch von dem inneren Raum (500) abgedichtet ist, durch Abdichten des inneren Raums (500), wobei ein druckreduzierter Zustand des inneren Raums (500) beibehalten wird,
wobei
das Glashaftmittel (300) beinhaltet
ein erstes Glashaftmittel (301) und
ein zweites Glashaftmittel (302),
wobei zumindest das zweite Glashaftmittel (302) des ersten Glashaftmittels (301) und des zweiten Glashaftmittels (302) das Glaspulver (310) und das Bindemittel (320) enthält,
wobei das Glaspulver (310), das in dem zweiten Glashaftmittel (302) enthalten ist, einen durchschnittlichen Teilchendurchmesser von größer oder gleich 25 µm und kleiner oder gleich 30 µm aufweist,
der Haftmittelanordnungsschritt beinhaltet
einen ersten Haftmittelanordnungsschritt des Anordnens des ersten Glashaftmittels (301) auf einem äußeren Abschnitt der einen Oberfläche (T100a) des ersten Substrats (T100), um eine Einzelrahmenform zu haben, und
einen zweiten Haftmittelanordnungsschritt des Anordnens des zweiten Glashaftmittels (302) innerhalb eines von dem ersten Glashaftmittel (301) umgebenen Bereichs auf der einen Oberfläche (T100a), um einen von dem ersten Glashaftmittel (301) umgebenen Bereich zu unterteilen, und
der Innenraumbildungsschritt das Schmelzen des ersten Glashaftmittels (301) beinhaltet, um den Innenraum (500), der von einer geschmolzenen Substanz des ersten Glashaftmittels (301) umgeben ist, zwischen dem ersten Substrat (T100) und dem zweiten Substrat (T200) zu bilden,
wobei
in dem zweiten Haftmittelanordnungsschritt das zweite Glashaftmittel (302) von dem ersten Glashaftmittel (301) beabstandet angeordnet wird, und
der Schritt des Bildens eines Raums mit reduziertem Druck das Schmelzen des zweiten Glashaftmittels (302) umfasst, um die geschmolzene Substanz des ersten Glashaftmittels (301) und eine geschmolzene Substanz des zweiten Glashaftmittels (302) miteinander in Kontakt zu bringen, um den Raum (50) mit reduziertem Druck zu bilden, und
in dem Schritt des Bildens des Raumes mit reduziertem Druck eine integrierte Platte (3) durch Zusammensetzen und Integrieren des ersten Substrats (T100), des zweiten Substrats (T200) und des Glashaftmittels (300) miteinander erhalten wird, und
in der integrierten Platte (3) das erste Glashaftmittel (301) und das zweite Glashaftmittel (302) integriert werden, wodurch das Dichtungselement (30) gebildet wird, das das erste Glashaftmittel (301) und das zweite Glashaftmittel (302) enthält, und
das Dichtungselement (30) den druckreduzierten Raum (50) umgibt.

2. Verfahren zur Herstellung einer Glasplatteneinheit nach Anspruch 1, wobei die Heißschmelztemperatur des ersten Glashaftmittels (301) niedriger ist als die Heißschmelztemperatur des zweiten Glashaftmittels (302),
in dem Innenraumbildungsschritt das Glashaftmittel auf eine Temperatur erwärmt wird, die höher als die Heißschmelztemperatur des ersten Glashaftmittels (301) und niedriger als die Heißschmelztemperatur des zweiten Glashaftmittels (302) ist, um nur das erste Glashaftmittel (301) von dem ersten Glashaftmittel (301) und dem zweiten Glashaftmittel (302) zu schmelzen.

3. Verfahren zur Herstellung einer Glasplatteneinheit nach Anspruch 1 oder Anspruch 2, wobei
das zweite Glashaftmittel (302) ein organisches Lösungsmittel enthält, welches das Bindemittel (320) auflöst oder dispergiert.

4. Verfahren zur Herstellung einer Glasplatteneinheit nach einem der Ansprüche 1 bis 3, wobei
das Verfahren zur Herstellung einer Glasplatteneinheit weiter einen Schneideschritt umfasst, bei dem die integrierte Platte (3) geschnitten wird, um eine Glasplatteneinheit (1) zu erhalten, die den druckreduzierten Raum (50) aufweist.

5. Verfahren zur Herstellung einer Glasplatteneinheit nach einem der Ansprüche 1 bis 4, weiter umfassend einen Schritt zur Bildung eines hermetischen Raums, bei dem ein hermetischer Raum (80) gebildet wird, der von einem Glashaftmittel (700), einem dritten Substrat (T600) und dem ersten oder zweiten Substrat (T100 oder T200) umgeben ist, wobei das Glashaftmittel zwischen dem ersten oder zweiten Substrat (T100 oder T200) und dem dritten Substrat (T600) angeordnet ist, das mindestens eine dritte Glasplatte (600) enthält.

6. Verfahren zur Herstellung eines Glasfensters, umfassend einen Schritt des Herstellens eines Glasfensters (90) durch Anbringen eines Fensterrahmens (91) an einer Glasplatteneinheit (1), die durch das Verfahren zur Herstellung einer Glasplatteneinheit nach einem der Ansprüche 1 bis 5 hergestellt wurde.

## Revendications

1. Procédé de fabrication d'une unité panneau de verre, comprenant:
une étape de pose d'un adhésif où l'on pose un adhésif de verre (300) sur une surface (T100a) parmi deux surfaces latérales (T100a, T100b) dans le sens de l'épaisseur d'un premier substrat (T100) pour former au moins une partie semblable à un cadre, l'adhésif de verre (300) comprenant de la poudre de verre (310) et un liant (320), la poudre de verre (310) présentant un diamètre particulaire moyen supérieur ou égal à 25 µm et inférieur ou égal à 30 µm, le liant (320) étant constitué de résine, le premier substrat (T100) comprenant au moins une première plaque de verre (100);
une étape de pose en vis-à-vis où l'on pose un deuxième substrat (T200) comprenant au moins une deuxième plaque de verre (200) pour qu'elle soit face à la surface (T100a);
une étape de formation d'un espace intérieur où l'on chauffe un composite de verre (2) comprenant le premier substrat (T100), le deuxième substrat (T200) et l'adhésif de verre (300) pour éliminer le liant (320) et pour fondre l'adhésif de verre (300) en vue de former un espace intérieur (500) entouré par une substance en fusion de l'adhésif de verre (300) entre le premier substrat (T100) et le deuxième substrat (T200);
une étape de réduction de la pression où l'on évacue le gaz dans l'espace intérieur (500) pour réduire la pression de l'espace intérieur (500); et
une étape de formation d'un espace à pression réduite où l'on forme un espace à pression réduite (50) hermétiquement scellé de l'espace intérieur (500) en scellant l'espace intérieur (500) en gardant un état de pression réduite de l'espace intérieur (500),
dans lequel
l'adhésif de verre (300) comprend
un premier adhésif de verre (301) et
un deuxième adhésif de verre (302),
au moins le deuxième adhésif de verre (302) du premier adhésif de verre (301) et du deuxième adhésif de verre (302) comprend la poudre de verre (310) et le liant (320), dans lequel la poudre de verre (310) comprise dans le deuxième adhésif de verre (302) présente un diamètre particulaire moyen supérieur ou égal à 25 µm et inférieur ou égal à 30 µm, l'état de pose d'un adhésif comprend une étape de pose d'un premier adhésif où l'on pose le premier adhésif de verre (301) sur une partie périphérique de la surface (T100a) du premier substrat (T100) pour obtenir une forme de simple cadre, et
une étape de pose d'un deuxième adhésif où l'on pose le deuxième adhésif de verre (302) à l'intérieur d'une zone entourée par le premier adhésif de verre (301) sur la surface (T100a) pour diviser une zone entourée par le premier adhésif de verre (301), et
l'étape de formation d'un espace intérieur comprend la fusion du premier adhésif de verre (301) pour former l'espace intérieur (500) entouré par une substance en fusion du premier adhésif de verre (301) entre le premier substrat (T100) et le deuxième substrat (T200),
dans lequel
à l'étape de pose d'un deuxième adhésif, le deuxième adhésif de verre (302) est posé à l'écart du premier adhésif de verre (301), et
l'étape de formation d'un espace à pression réduite comprend la fusion du deuxième adhésif de verre (302) pour faire entrer la substance en fusion du premier adhésif de verre (301) et une substance en fusion du deuxième adhésif de verre (302) en contact l'une avec l'autre pour former l'espace à pression réduite (50), et
à l'étape de formation d'un espace à pression réduite, on obtient un panneau intégré (3) par composition et intégration du premier substrat (T100), du deuxième substrat (T200) et de l'adhésif de verre (300) l'un avec l'autre, et
dans le panneau intégré (3), le premier adhésif de verre (301) et le deuxième adhésif de verre (302) sont intégrés, formant ainsi l'élément d'étanchéité (30) comprenant le premier adhésif de verre (301) et le deuxième adhésif de verre (302), et l'élément d'étanchéité (30) entoure l'espace à pression réduite (50).

2. Procédé de fabrication d'une unité panneau de verre selon la revendication 1, dans lequel
la température de thermofusion du premier adhésif de verre (301) est inférieure à la température de thermofusion du deuxième adhésif de verre (302),
à l'étape de formation de l'espace intérieur, l'adhésif de verre est chauffé à une température plus élevée que la température de thermofusion du premier adhésif de verre (301) et inférieure à la température de thermofusion du deuxième adhésif de verre (302), pour ne fondre que le premier adhésif de verre (301) parmi le premier adhésif de verre (301) et le deuxième adhésif de verre (302).

3. Procédé de fabrication d'une unité panneau de verre selon la revendication 1 ou la revendication 2, dans lequel
le deuxième adhésif de verre (302) contient un solvant organique dissolvant ou dispersant le liant (320).

4. Procédé de fabrication d'une unité panneau de verre selon l'une quelconque des revendications 1 à 3, dans lequel
le procédé de fabrication d'une unité panneau de verre comprend en outre une étape de découpe où l'on découpe le panneau intégré (3) pour obtenir une unité panneau de verre (1) comprenant l'espace à pression réduite (50).

5. Procédé de fabrication d'une unité panneau de verre selon l'une quelconque des revendications 1 à 4, comprenant en outre une étape de formation d'un espace hermétique où l'on forme un espace hermétique (80) entouré par un adhésif de verre (700), un troisième substrat (T600) et le premier ou deuxième substrat (T100 ou T200), l'adhésif de verre étant posé entre le premier ou le deuxième substrat (T100 ou T200) et le troisième substrat (T600) comprenant au moins une troisième plaque de verre (600).

6. Procédé de fabrication d'une fenêtre de verre, comprenant l'étape de fabrication d'une fenêtre de verre (90) en assemblant un cadre de fenêtre (91) à une unité panneau de verre (1) fabriqué par le procédé de fabrication d'une unité panneau de verre selon l'une quelconque des revendications 1 à 5.
